(19) Europäisches Patentamt
European Patent Office
Office européen des brevets

(11) **EP 1 522 790 B1**

(12) **EUROPÄISCHE PATENTSCHRIFT**

(45) Veröffentlichungstag und Bekanntmachung des Hinweises auf die Patenterteilung:
**23.11.2011 Patentblatt 2011/47**

(51) Int Cl.:
*F23N 5/12* (2006.01) *F23N 1/02* (2006.01)

(21) Anmeldenummer: **04023477.5**

(22) Anmeldetag: **01.10.2004**

(54) **Verfahren zur Regelung eines Gasbrenners, insbesondere bei Heizungsanlagen mit Gebläse**

Method for Controlling a Gas Burner, in particular in Heating Installations with Blower

Procédé de régulation d'un brûleur à gaz, en particulier dans des installations de chauffe avec ventilateur

(84) Benannte Vertragsstaaten:
**AT BE BG CH CY CZ DE DK EE ES FI FR GB GR HU IE IT LI LU MC NL PL PT RO SE SI SK TR**

(30) Priorität: **08.10.2003 AT 15852003**
**30.03.2004 DE 102004015523**
**30.03.2004 DE 102004015432**
**30.03.2004 DE 102004015522**
**30.03.2004 DE 102004015520**

(43) Veröffentlichungstag der Anmeldung:
**13.04.2005 Patentblatt 2005/15**

(73) Patentinhaber: **Vaillant GmbH**
**42859 Remscheid (DE)**

(72) Erfinder:
• **Altendorf, Frank**
**51061 Köln (DE)**
• **Fassbender, Hubert**
**41352 Korschenbroich (DE)**
• **Grüneberg, Richard**
**42283 Wuppertal (DE)**
• **Klepka, Michael**
**42369 Wuppertal (DE)**
• **Richter, Klaus**
**42857 Remscheid (DE)**
• **Schmidt, Nicole**
**42899 Remscheid (DE)**
• **Stirnberg, Bettina**
**42477 Radevormwald (DE)**

(74) Vertreter: **Hocker, Thomas**
**Vaillant GmbH**
**Berghauser Strasse 40**
**42859 Remscheid (DE)**

(56) Entgegenhaltungen:
EP-A- 0 806 610 EP-A- 1 091 174
EP-A- 1 207 340 EP-A- 1 331 444
DE-A1- 10 030 063 DE-A1- 19 750 873
DE-A1- 19 820 192 DE-A1- 19 838 361
GB-A- 2 132 749 US-A- 5 091 844
US-A- 5 190 454

**Beschreibung**

Die Erfindung bezieht sich auf ein Verfahren zur Regelung eines Gasbrenners, insbesondere bei Heizungsanlagen mit Gebläse.

Bei Heizungsanlagen mit Gebläse gemäß dem Stand der Technik wird mittels einer Gasarmatur die Brenngasmenge an die Luftmenge angepaßt. Hierzu wird der Luftmassenstrom meist mittels des Druckabfalls an einer Blende gemessen und über diesen Steuerdruck die Brenngasmenge gesteuert. Dieses Verfahren zur Mischung von Brenngas und Luft hat den Nachteil, dass aufgrund wechselnder Brenngaszusammensetzung der Luftüberschuss variieren kann; hierdurch kann es zu hohen Schadstoffemissionen während des Betriebs und Startschwierigkeiten kommen.

Aus der EP 770 824 B1 ist bekannt, dass das Brenngas-Luft-Gemisch dadurch geregelt werden kann, dass der Ionisationsstrom, der vom Luftüberschuss abhängig ist und bei stöchiometrischer Verbrennung sein Maximum aufweist, gemessen wird und das Gemisch in Abhängigkeit von dem Ionisationsstromsignal verändert werden kann. Hierbei besteht das Problem, das ein relativ kleines Signal sehr genau gemessen werden muss.

Bei einem Verfahren zur Regelung des Brenngas-Luft-Gemischs gemäß EP 833 106 befindet sich ein Flammenfühler nahe einer Brennerplatte. Durch das Erhöhen des

Luftüberschusses wird ein Abheben der Flamme bewirkt, wodurch ein grobes Maß für den Luftüberschuss gegeben ist.

Ebenfalls bekannt ist ein Verfahren, bei dem der Sauerstoffanteil im Abgas eines Gasbrenners gemessen wird und das Brenngas-Luft-Gemisch derart geregelt wird, dass sich ein bestimmter Sauerstoffanteil im Abgas ergibt. Ein solches Verfahren wird zum Beispiel in US 5 190 454 beschrieben. Hierzu ist zu bemerken, dass das Messsignal sich im Arbeitsbereich nur wenig und zudem nahezu linear ändert. Sauerstoffsensoren, welche über Jahre hinweg einen Sauerstoffüberschuss präzise messen, gehören nicht zum Stand der Technik. Dies hat zur Folge, dass bei einer Messung des Sauerstoffanteils eine sehr exakte Messung notwendig ist und die Sensoren frühzeitig getauscht werden müssen.

In der EP 1 331 444 ist ein Verfahren beschrieben, bei dem mittels eines Kohlenmonoxid-Sensors in der Abgasleitung eines Heizgerätes das Brenngas-Luft-Verhältnis eingestellt werden kann. Für ein derartiges Verfahren eignen sich Gassensoren aus Galiumoxid ($Ga_2O_3$), die je nach Anwendung bei einer Temperatur im Bereich zwischen 400 und 800°C arbeiten. Dabei wird das Sensorelement durch einen auf seiner Rückseite angebrachten Heizer elektrisch beheizt. Je nach Höhe der Temperatur ändert der Sensor seine Sensitivität. Man ist also daher bemüht, die Sensortemperatur möglichst auf einem Wert (z.B 690°C) zu halten.

Bei dem Verfahren zur Einstellung des Brenngas-Luft-Verhältnises wird das Brenngas-Luft-Verhältnis angefettet bis ein signifikanter Anstieg der gemessenen Kohlenmonoxidemissionen erfolgt und anschließend das Gemisch definiert abgemagert. Hierdurch wird ein Korrekturfaktor ermittelt, welcher beim Betrieb im gesamten Modulationsbereich zur Korrektur der hinterlegten Brenngas-Luft-Kennlinie an den Individualfall dient. Ein Vorteil des Verfahrens ist die geringere Leistungsaufnahme des Gebläses, da der Druckverlust für die Volumenstrommessung überflüssig wird. Hierdurch reduzieren sich auch die Gebläsegeräusche und ein kleineres, in der Regel kostengünstigeres Gebläse kann verwendet werden. Es ist nicht notwendig durch unterschiedliche Bauteile zwischen Erdgas H, Erdgas L und Flüssiggas zu unterscheiden; es genügt eine entsprechende Standardvorgabe für die Regelung, damit der Brenner gestartet werden kann. Das Brenngas-Luft-Gemisch kann angefettet werden, indem man die Brenngasmenge erhöht oder die Luftmenge reduziert. Zur Abmagerung des Gemischs kann die Brenngasmenge reduziert oder die Luftmenge erhöht werden. Es ist vorstellbar, dass bei dem Verfahren sowohl die Brenngas-, als auch Luftmenge verändert wird.

Das Kalibrierverfahren kann auch außerhalb der vorgesehenen Zyklen durchgeführt werden, wenn eine ungewöhnlich hohe Kohlenmonoxid- beziehungsweise Kohlenwasserstoffkonzentration vorliegt. So ist es beispielsweise denkbar, dass sich kurz nach einer Kalibrierung aufgrund einer Flüssiggas-Luft-Zumischung das Brenngas-Luft-Verhältnis signifikant ändert und eine hohe Kohlenmonoxid- beziehungsweise Kohlenwasserstoffkonzentration im Abgas entsteht.

Der Erfindung liegt die Aufgabe zugrunde, das aus der EP 1 331 444 bekannte Verfahren zu optimieren und weitere Funktionen zu integrieren.

So ist aus der EP 1 331 444 nicht bekannt, wie mit unbekannten Brenngas-Luft-Gemischen der Brenner zunächst einmal sicher gestartet werden kann, damit das Kalibrierverfahren durchgeführt werden kann. Weiterhin ist unbekannt, wie selbsterregte Schwingungen ohne die Verstandestätigkeit eines Menschen vom System selbst erkannt und abgestellt werden kann. Ein weiteres bisher ungelöstes Problem stellt die Veränderung der Rahmenparameter während des Betriebs durch Aufheizung dar.

Auch ist es wünschenswert, bestimmte Charakteristika über den Belastungs-Modulationsbereich zu ermöglichen. Insbesondere bei großen Differenzen zwischen Minimal- und Maximallast des Brenners kann es bei langen, dünnen Gasleitungen zu großen Anschlussdruckschwankungen kommen. Der sich dadurch bei Teillast ergebende relativ hohe Druck führt beim elektronischen Gas-Luft-Verbund zu einem relativ fetten Gemisch, während der relativ niedrige Druck bei Volllast zu einem relativ mageren Gemisch führt. Auch Bauteiltoleranzen oder besondere Installationsbedingungen können zu einem nicht mehr optimalen Betrieb am Rande des Betriebsfeldes / Toleranzfeldes führen, sowohl bei Nennlast als auch bei Teillast.

Ferner soll das Problem der relativ kurzzeitigen Störungen beispielsweise aufgrund von Windbeaufschlagung des Luft-Abgas-Systems gelöst werden.

Bei elektronischen Gas-Luftverbund-Sytemen ist es gemäß dem Stand der Technik üblich, bei der Umstellung von der 2. zur 3. Gasfamilien, also von Erdgas auf Flüssiggas oder umgekehrt, zusätzlich zum Düsenwechsel einige in der Geräteelektronik hinterlegten Parameter manuell umzuprogrammieren.

In der Praxis werden Gasbrenner für Heizungsanlagen mit etwa 20 bis 40 % Luftüberschuss betrieben. Bei modernen, modulierenden Heizgeräten wird der Verbrennungsluftvolumenstrom durch die Förderleistung eines modulierbaren Gebläses variabel eingestellt. Die Brenngasmenge wird entweder über einen Brenngas-Luft-Verbund, z.B. mittels einer Gasarmatur, bei der mittels einer Membran der Brenngasvolumenstrom dem Luftvolumenstrom angepaßt wird, oder über ein regelbares Gasventil eingestellt.

Der Brenngasmassenstrom durch eine Düse wird durch den Düsenquerschnitt Q, den Druck vor der Düse (Brenngasdruck $p_{Brenngas}$) und dahinter, den Düsenausflußfaktor $\psi$, die Dichte $\rho$ und den Isentropenexponenten $\kappa$ des Brenngases bestimmt.

$$\dot{m} = \Psi Q \sqrt{\frac{2K}{K-1} p_{Brenngas} \rho_{Brenngas} \left( \beta^{2/K} - \beta^{(K+1)/K} \right)}$$

$$\beta = \frac{p_{hinter\ Düse}}{p_{vor\ Düse}}$$

Heizgeräte werden mit Erdgas mit einem Druck von nominal $20 * 10^5$ Pa betrieben; bei Flüssiggas sind es $50 * 10^5$ Pa.

Tabelle 1: Unterschiede Methan zu Propan

|  | Heizwert | Dichte | Mindestluftbedarf | Vol.str. Brenngas pro kW | Vol.str.Luft pro kW |
|---|---|---|---|---|---|
|  | $H_u$ | $\rho$ | $I_{min}$ | $dV_L/dt$ | $dV_B/dt$ |
|  | kWh/m$^3$ | kg/m$^3$ | m$^3_L$/m$^3_8$ | m$^3$/h | m$^3$/h |
| Methan CH$_4$ | 9,968 | 0,7175 | 9,52 | 0,1003 | 0,9551 |
| Propan C$_3$H$_8$ | 25,893 | 2,0110 | 23,80 | 0,0386 | 0,9192 |

Erdgas besteht im Wesentlichen aus Methan. Propan ist ein typisches Flüssiggas. Aus Tabelle 1 wird deutlich, dass ein Heizgerät nicht ohne Änderungen von Erdgas auf Flüssiggas oder umgekehrt umgestellt werden kann. Zwar wird pro Belastungseinheit etwa die gleiche Menge Luft benötigt, doch unterscheiden sich die notwendigen Brenngasströme erheblich.

Daher wird in der Praxis bei der Verwendung von Flüssiggas zusätzlich eine drosselnde Blende in den Gasweg eingebaut, um den Brenngasstrom entsprechend zu reduzieren. Da jedoch aus oben genannten Gründen das Ausströmverhalten verschiedener Gase unterschiedlich ist, kann mittels einer Düse lediglich in einem Betriebspunkt das Brenngas-Luft-Verhältnis angepaßt werden. Für den Modulationsbereich, also den Bereich von Minimal- bis Maximallast muss zusätzlich das Verhältnis angepaßt werden.

Gemäß dem Stand der Technik muss bei der Umrüstung von Erdgas auf Flüssiggas die Drossel eingesetzt werden und zusätzlich müssen in der Elektronik Parameter umprogrammiert werden. Vergisst der Heizungsinstallateur die Umprogrammierung, so kann es zu Betriebsstörungen kommen, zumindest ist mit einer unhygienischen Verbrennung zu rechnen. Ein Ziel der Erfindung ist daher, auf den manuellen Vorgang der Umprogrammierung verzichten zu können und dennoch eine hygienische Verbrennung zu garantieren.

Gemäß den Merkmalen des unabhängigen Anspruchs können kurzzeitige Störungen z.B. durch Windbefall eliminiert werden.

Vorteilhaft sind auch andere, nicht beanspruchte Maßnahmen.

So kann der Gasbrenner unabhängig von der vorliegenden Gasqualität gestartet werden, indem bei der Erstinbetriebnahme die Regelung beim ersten Zündversuch eine Grundeinstellung für das Signal für die Brenngasmenge und die Luftmenge, welche unter wahrscheinlichen Rahmenbedingungen einem mageren Gemisch entspricht, vorgegeben wird und sofern keine Flamme erkannt wird bei den nächsten Zündversuchen das Brenngas-Luft-Gemisch angefettet wird bis eine Flammenerkennung erfolgt. Eine vorliegende Flamme ist Grundvoraussetzung für die Durchführung des Kalibrierverfahrens.

Wird, sofern eine Flamme frühestens beim 3. Zündversuch erkannt wird, die Brenngaszufuhr wieder unmittelbar unterbrochen und die Prozedur wieder mit der Grundeinstellung begonnen, so kann vermieden werden, dass - durchaus gängige - Inbetriebnahmefehler, beispielsweise ein geschlossener Gashahn, zu problematischen Betriebszuständen führen. Selbsterregte Verbrennungsschwingungen können vermieden werden, indem in dem Fall, wenn nach der Kalibrierung hohe Kohlenmonoxid- oder Kohlenwasserstoffemissionen gemessen werden, das Brenngas-Luft-Gemisch leicht abgemagert oder angefettet wird.

Ein Kalibriervorgang kann nach einer vorgegebenen Zeit nach der Inbetriebnahme des Brenners oder bei Erreichen einer vorgegebenen Temperatur im System erfolgen. Hierdurch wird der Effekt, der beispielsweise durch das Aufheizen einer Unterdruckkammer verursacht ist, ausgeglichen werden. Als Temperatur kann hier beispielsweise die Temperatur in der Unterdruckkammer, die Vorlauf- oder Rücklauftemperatur dienen.

Umgekehrt kann nach einer gewissen Stillstandszeit wieder eine Kalibrierung notwendig sein. Als Faktoren kommen ferner in Betracht: Das Verhältnis zwischen Betriebs- und Stillstandszeiten, Wasserinhalt des Gerätes, Außentemperatur, Kaminzug, Abgassystem, etc.

Die Kennlinie, welche als Basis für die Regelung dient, kann zur Vorgabe je eines Sollsignal für die Brenngasmenge und die Luftmenge für vorgegebenen Brennerleistungen derartig definiert verändert werden, dass das Brenngas-Luft-Gemisch über den Modulationsbereich definiert angefettet und oder abgemagert wird. So ist beispielsweise ein hoher Luftüberschuss bei hoher Modulationsrate zu vermeiden, um ein Abhaben der Flamme zu verhindern.

Die Kennlinie zur Vorgabe je eines Sollsignal für die Brenngasmenge und die Luftmenge für vorgegebenen Brennerleistungen kann durch mehrere Kalibriervorgänge bei unterschiedlichen Brennerbelastungen angepasst und für die anderen Brennerbelastungen iteriert, extra- oder interpoliert werden.

Um Windbefall zu eliminieren, kann nach einem Gerätestart bei Überschreitung eines vorgegebenen Grenzwertes des der Kohlenmonoxid-Konzentration oder Konzentration an unverbrannten Kohlenwasserstoffen äquivalentes Signals eine Zeiterfassung gestartet werden und für den Fall, dass binnen einer vorgegebenen Zeitspanne der Grenzwert nicht unterschritten wird, das Brenngas-Luft-Gemisch dauerhaft oder temporär abgemagert werden und diese Vorgehensweise optional wiederholt oder ein Kalibriervorgang eingeleitet werden.

Eine Kalibrierung kann insbesondere dann durchgeführt werden, wenn bei den bisher vorgegebenen Rahmenbedingungen erhöhte Schadstoffemissionen auftreten. Dies ist insbesondere dann der Fall, wenn das der Kohlenmonoxid-Konzentration oder Konzentration an unverbrannten Kohlenwasserstoffen äquivalentes Signal einen Grenzwert überschreitet.

Bei der Umstellung von Erdgas auf Flüssiggas oder umgekehrt wird das System bei einer vorgegebenen Ansteuerung des Gebläses und der Einrichtung zur Regelung der Brenngasmenge kalibriert, die Ansteuerung des Gebläses und der Einrichtung zur Regelung der Brenngasmenge in vorgegebenen Maße verändert und beim signifikanten Anstieg des der Konzentration an Kohlenmonoxid oder unverbrannten Kohlenwasserstoffen äquivalenten Signals, welches mittels Abgassensor gemessen wird, versieht die Regelung die Kennlinie zur Vorgabe je eines Sollsignal für die Brenngasmenge und die Luftmenge für vorgegebenen Brennerleistungen mit einer anderen vorgegebenen Steigung.

Bei einer Umstellung der Gasart (Erdgas - Flüssiggas) wird bei mindestens einer vorgegebenen Stellung der Mittel zur Einstellung des Verbrennungsluftvolumenstroms, zum Beispiel einer vorgegebenen Gebläsedrehzahl, und der Mittel zur Einstellung des Brenngasvolumenstroms, zum Beispiel ein bestimmter Öffnungshub einer Gasarmatur, außerhalb des Kalibrierungspunktes eine Messung einer bestimmten Gaskonzentration im Abgasweg des Gasbrenners, zum Beispiel Sauerstoff oder Kohlenmonoxid, vorgenommen und das Messergebnis mit mindestens einem Referenzwert oder mindestens einem weiteren Messwert verglichen. Die Regelung stellt - basierend auf den Messergebnissen - das Verhältnis des Brenngasvolumenstroms zu dem Verbrennungsluftvolumenstrom durch Anpassung der Brenngas-Luft-Kennlinie entsprechend ein. Kommt im Abgasweg ein Kohlenmonoxid sensibler Sensor zum Einsatz, so kann besonders einfach ein auswertbares Signal erhalten werden. Während ein Sauerstoffsensor bei nahstöchiometrsicher Verbrennung ein lineares Signal misst, kann ein CO-Sensor ein exponentielles Signal messen.

Eine Düse wird bei der Umstellung von Erdgas- auf Flüssiggas-Betrieb in die Brenngasleitung eingesetzt, um den sehr unterschiedlichen Gaseigenschaften gerecht zu werden und für eine Belastungsvorgabe identische Ansteuerungen zu ermöglichen.

Das Verfahren kann nach dem Betätigen des elektrischen Hauptschalters durchgeführt werden. Hierdurch wird erreicht, dass bei einer Erstinbetriebnahme, jedoch auch bei Wartungen mit möglichem Düsenwechsel, eine automatische Anpassung erfolgt.

Die Erfindung sowie Ausführungsformen, die nicht unter die Erfindung fallen, werden im Folgenden anhand der Figuren 1 bis 8 erläutert. Es zeigen:

Fig. 1 eine Heizungsanlage zur Durchführung des erfindungsgemäßes Verfahrens,

Fig. 2 den Zusammenhang zwischen Luftüberschuß und Kohlenmonoxidemission,

Fig. 3 Kennlinien in der das Verhältnis zwischen Gebläsedrehzahl und der Schrittzahl des Schrittmotors des Gasventils dargestellt ist,

Fig. 4 Luftzahlen über der Belastung zu den Kennlinien aus Figur 3

Fig. 5 Kennlinien bezüglich des Verhältnisses zwischen Gebläsedrehzahl und der Schrittzahl des Schrittmotors des Gasventils gemäß einer vorteilhaften Ausgestaltung,

Fig. 6 im stationären Betrieb den Verlauf der gemessenen Kohlenmonoxidemissionen bei plötzlichem Windeinfall und der Kompensationsmaßnahme,

Fig. 7 beim Start und Windeinfall die Wirkung der Kompensationsmaßnahme und

Figur 8 je eine zur Einstellung des Brenngas-Luft-Verhältnisses für Erdgas und Flüssiggas.

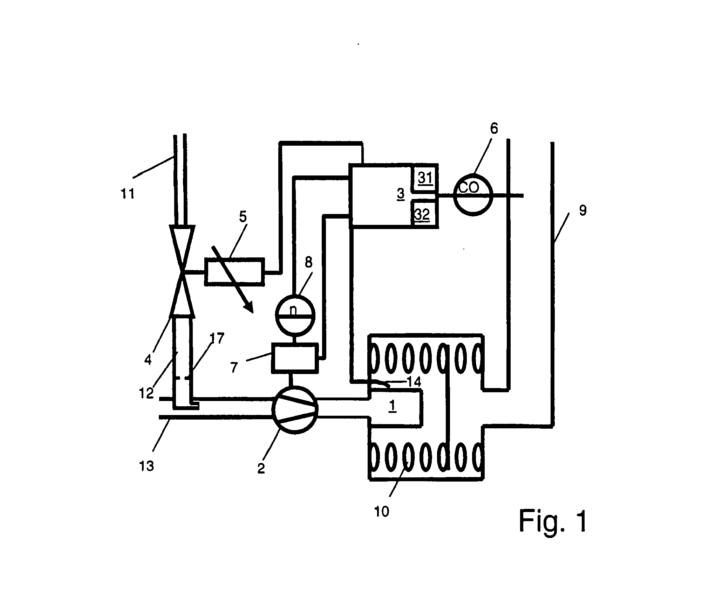

Eine Heizungsanlage gemäß Fig. 1 verfügt über einen Brenner 1 mit einem diesen umgebenden Wärmeaustauscher 10, an den sich ein Abgasrohr 9, in dem sich ein Abgassensor 6 befindet, anschließt. Dem Brenner 1 ist ein Gebläse 2 vorgeschaltet. Auf der Eingangsseite des Gebläses 2 befindet sich eine Luftansaugleitung 13, in die auch eine Brenngasleitung 12, die durch ein Gasventil 4 von der Brenngaszuführung 11 getrennt ist, reicht. In der Brenngasleitung befindet sich optional für den Flüssiggasbetrieb eine Drossel 17. Das Gasventil 4 verfügt über einen Stellantrieb 5. Das Gebläse 2 verfügt über einen Antriebsmotor 7 mit Drehzahlerfassung 8. Stellantrieb 5, Antriebsmotor 7, Drehzahlerfassung 8 und Abgassensor 6 sind mit einer Regelung 3, die über ein Speichermodul 31 und Rechenmodul 32 verfügt, verbunden. Ebenfalls mit der Regelung ist eine Ionisationselektrode 14, die knapp oberhalb des Brenners 1 positioniert ist, verbunden.

Beim Brennerbetrieb wird von der Regelung 3 z.B. aufgrund eines nicht dargestellten Raumthermostaten in Verbindung mit einer ebenfalls nicht dargestellten Vorlauftemperaturerfassung im Rechenmodul 32 eine Sollleistung des Brenners 1 berechnet. Im Speichermodul 31 ist zu der Sollleistung ein Sollsignal für die Brenngas- und Luftmenge hinterlegt. Mit diesen Sollsignalen wird das Gebläse 2 mit seinem Antriebsmotor 7 und seiner Drehzahlerfassung sowie das Gasventil 4 mit seinem Stellantrieb 5 angesteuert, wodurch ein Brenngas-Luft-Gemisch in das Gebläse 2 und von dort zum Brenner 1 strömt. Das Gemisch wird an der äußeren Oberfläche des Brenners 1 verbrannt, durchströmt den Wärmeaustauscher 10 und strömt anschließend durch das Abgasrohr 9 ins Freie.

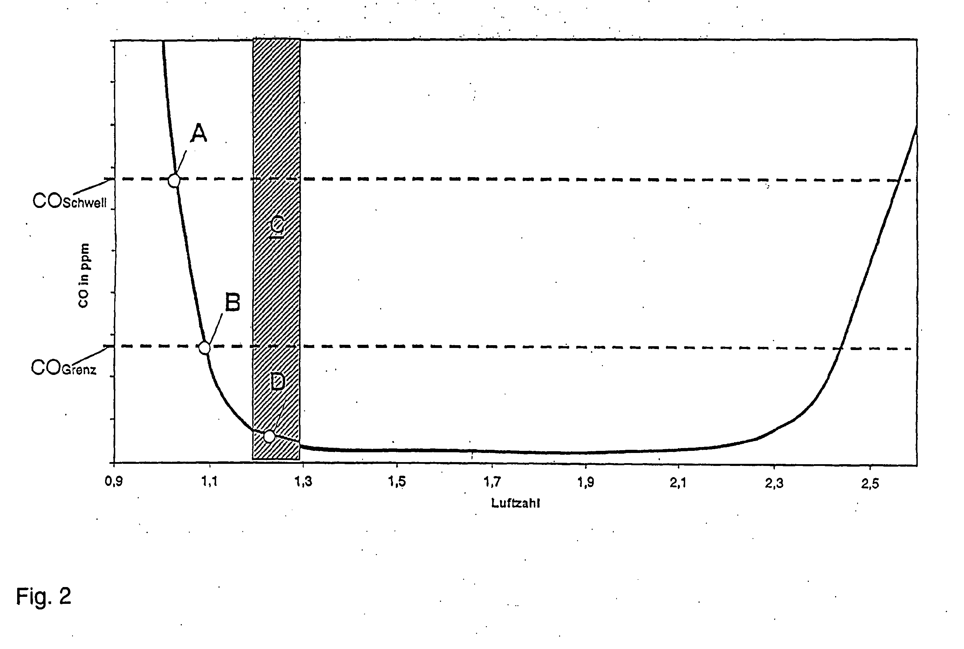

Fig. 2 zeigt den Zusammenhang zwischen Kohlenmoxidkonzentration und Verbrennungsluftverhältnis λ. Um eine vollständige Verbrennung zu erreichen, ist theoretisch ein Verbrennungsluftverhältnis λ von 1,0 notwendig.

$$\lambda = \frac{m_L}{m_{L,min}}$$

Hierbei ist $m_L$ die tatsächliche Luftmenge und $m_{L,min}$ die stöchiometrische Luftmenge. Bei der Verbrennung von Kohlenwasserstoffen zu Kohlendioxid entsteht stets Kohlenmonoxid als Zwischenprodukt. Aufgrund der begrenzten Reaktionszeit in der wärmebeeinflußten Zone und eine unzureichende Durchmischung von Brenngas und Luft, ist in der Praxis jedoch ein gewisser Luftüberschuss notwendig, um einen vollständigen Ausbrand zu gewährleisten. Daher hat man in der Regel bei knapp überstöchiometrischer Verbrennung einen CO-Wert von weit über 1000 ppm. Erst bei einem Luftüberschuß von ca. 10% fallen die Kohlenmonoxid-Emissionen im ausreagierten Abgas deutlich und erreichen bei üblichen Brennern Werte unter 100 ppm. Mit Erhöhung der Luftzahl fällt jedoch - aufgrund des Anteils inerter Gase - die Verbrennungstemperatur; die Verbrennungsreaktion wird verlangsamt und es kommt zum Abbruch der Reaktion am Wärmeaustauscher. Daher ist ab einem Luftüberschuss von ca. 80 % ein deutlicher Anstieg der Kohlenmonoxidemissionen zu verzeichnen.

Da bei stöchiometrischer Verbrennung (theoretisch) der gesamte Brennstoff verbrannt wird und keine überschüssige Luft vorhanden ist, ist hierbei die Verbrennungstemperatur maximal. Mit überschüssiger Luft wird der Anteil der Inertgase erhöht, wodurch die Verbrennungstemperatur sinkt. Dies hat zur Folge, dass die Stickoxidemissionen bei stöchiometrischer Verbrennung maximal sind und bei Erhöhung des Luftüberschusses abnehmen. Auch der Wirkungsgrad einer Heizungsanlage ist bei stöchiometrischer Verbrennung maximal und nimmt bei Erhöhung des Luftüberschusses ab, da die inerten Gase Wärmeverluste aufnehmen und die Verweilzeit des Abgases im Wärmeaustauscher aufgrund der erhöhten Strömungsgeschwindigkeit reduziert wird, was auch durch den verbesserten Wärmeübergang nicht kompensiert wird. Es ist jedoch zu berücksichtigen, dass es sowohl bei nahstöchiometrischer Verbrennung, als auch bei sehr großen Luftüberschüssen zu einer Russbildung kommen kann; diese verschlechtert den Wärmeübergang am Wärmeaustauscher.

Oben genannten Tatsachen haben zur Folge, dass Gasbrenner bevorzugt mit einem definierten Luftüberschuss betrieben werden. Im Ausführungsbeispiel wird daher von einer Sollluftzahl von ca. 1,25 ausgegangen. In Fig. 2 entspricht dies dem Punkt D, der in einem Sollbereich C liegt.

Bei der Verbrennung gilt:

$$\dot{V}_{Luft} = l_{min} * \lambda * \dot{V}_{Brenngas}$$

Hierbei ist $l_{min}$ der Mindestluftbedarf. Da bei einem realen Brennersystem das Verhältnis von Brenngas zu Luft über den gesamten Modulationsbereich nicht konstant sein muss, ergibt sich eine Abhängigkeit

$$\dot{m}_{Luft} = f(P) * \dot{m}_{Brenngas}$$

f(P) ist hierbei die leistungsabhängige Verhältnisfunktion, die fast linear ist, zwischen Brenngas und Luft.

Bei der Erstinbetriebnahme sind das Brenngas und der Druckverlust der gesamten Heizungsanlage unbekannt. Das Brenngas-Luft-Gemisch, das sich daher mit einer vorgegebenen Grundeinstellung für das Gebläse 2 und das Gasventil 4 einstellt, kann daher sehr unterschiedlich sein. Ist das Gemisch zu mager, so erfolgt bei einem Startvorgang keine Zündung des Brenners; das gleiche gilt für ein zu fettes Gemisch. Zündfähige magere Gemische neigen zum Abheben der Flamme vom Brenner, wodurch die Ionisationselektrode 14 keine Flamme erfassen kann. Bei zündfähigen, fetten Gemischen kann es zu einem lauten Zündgeräusch und einer Verpuffung kommen.

Daher wird bei der Erstinbetriebnahme ein erster Startvorgang mit einer Grundeinstellung, welche unter wahrscheinlichen Rahmenbedingungen einem mageren Gemisch entspricht, durchgeführt. Führt dieser Startvorgang nicht zu einem Erkennen einer Flamme mittels Ionisationselektrode 14, so wird der Startvorgang abgebrochen. Nach einer Spülphase mittels des Gebläses 2 wird ein neuer Startvorgang mit einem fetteren Gemisch durchgeführt. Dies kann man sowohl dadurch erreichen, dass das Gasventil 4 weiter geöffnet wird oder die Drehzahl des Gebläses 2 gesenkt wird. Diese Vorgehensweise lässt sich wiederholen, bis eine Flamme erkannt wird.

Bei der Erstinstallation eines Heizgerätes kommt es vor, dass der Installateur das Öffnen des Gashahnes vergisst und erst nach den ersten erfolglosen Startversuchen den Gashahn öffnet. Hierdurch ist es möglich, dass der Brenner dann mit derartig hohen Emissionen im nahstöchiometrischen oder unterstöchiometrischen Bereich betrieben wird, dass das Kalibrierverfahren nicht mehr durchgeführt werden kann. Daher wird, sofern eine Flamme erst beim 3. oder einem späteren Zündversuch erkannt wird, die Flamme wieder unmittelbar gelöscht (Schließen des Gasventils) und der nächste Startversuch wieder mit dem ursprünglichen Brenngas-Luft-Verhältnis gestartet. Damit ist sichergestellt, dass der Gashahn geöffnet ist. Erfolg nun eine Flammenerkennung wieder bei einem fortgeschrittenen Zündversuch, so kann davon ausgegangen werden, dass kein überfettes Gemisch vorliegt. Ein unmittelbares Löschen der Flamme erfolgt dann nicht mehr.

Nach der erfolgreichen Zündung folgt eine kurze Betriebszeit, in der die Flamme mit unveränderten Betriebsbedingungen brennt, damit ein stationärer Zustand des Heizgerätes eintritt und die Flamme sich stabilisieren kann. Nach dieser Phase beginnt die Kalibrierung des Brenngas-Luft-Verhältnisses.

Zu Beginn der Kalibrierung liegt ein beliebiges Brenngas-Luft-Verhältnis vor. Die Regelung 3 steuert kontinuierlich den Stellantrieb 5 des Gasventils 4 derartig, dass stetig mehr Brenngas bei gleicher Luftmenge in das Gebläse 2 gelangt. Hierdurch wird das Gemisch angefettet; die Luftzahl sinkt. Der Abgassensor 6 mißt die Kohlenmonoxidemission im Abgasrohr 9 und leitet das Signal an die Regelung 3 weiter. Registriert die Regelung 3, dass die Kohlenmonoxidemission einen im Speichermodul 31 vorgegebenen Schwellwert von 500 ppm (Punkt A in Fig. 2) überschritten hat, so wird das Gemisch nicht weiter angefettet. Es ist bekannt, dass derartige Kohlenmonoxidemissionen bei einer Luftzahl von ca. 1,08 erreicht werden. Der Regelung 3 ist nun die Drehzahl des Gebläses 2 von dem Drehzahlsensor 8 des Antriebsmotors 7 und die Stellung des Gasventils 4 (beispielsweise über die Taktung des Stellantriebes 5 in Form der Pulsweitenmodulation) bekannt. Diese Daten werden im Speichermodul 31 abgelegt. Durch den Vergleich dieser Daten mit ebenfalls im Speichermodul 31 abgelegten Referenzwerten im Rechenmodul 32 wird ein Korrekturfaktor k festgelegt. Die Referenzwerte entsprechen der Einstellung bei einem Korrekturwert k = 1.

Der Korrekturwert k lässt sich beispielsweise errechnen gemäß

$$k = \frac{f(\text{Pulssignal}_{\text{Ist}})}{f(\text{Pulssignal}_{\text{Re ferenz}})}$$

Das Pulssignal$_{\text{Ist}}$ entspricht hierbei der Schrittzahl des Schrittmotors. Der Korrekturwert wird im Speichermodul 31 abgelegt. Bei zukünftigen Starts des Brenner-Systems wird bei den Startbedingungen (Drehzahl des Gebläses 2 und Stellung des Gasventils 4) die Standardeinstellung um den Korrekturfaktor verändert, um optimiert einen Brennerstart einleiten zu können. Erfolgt mit dieser Einstellung keine Flammenerkennung, so kann das Gemisch bei weiteren Startversuchen weiter angefettet werden.

Für den Heizbetrieb ergibt sich, dass die Regelung 3 im auf den Brennerstart folgenden bedarfsabhängigen Betrieb das Brenngas-Luft-Verhältnis gemäß der Beziehung

$$\dot{m}_{\text{Luft}}(P) = f(P) * \dot{m}_{\text{Brenngas}}(P) * k$$

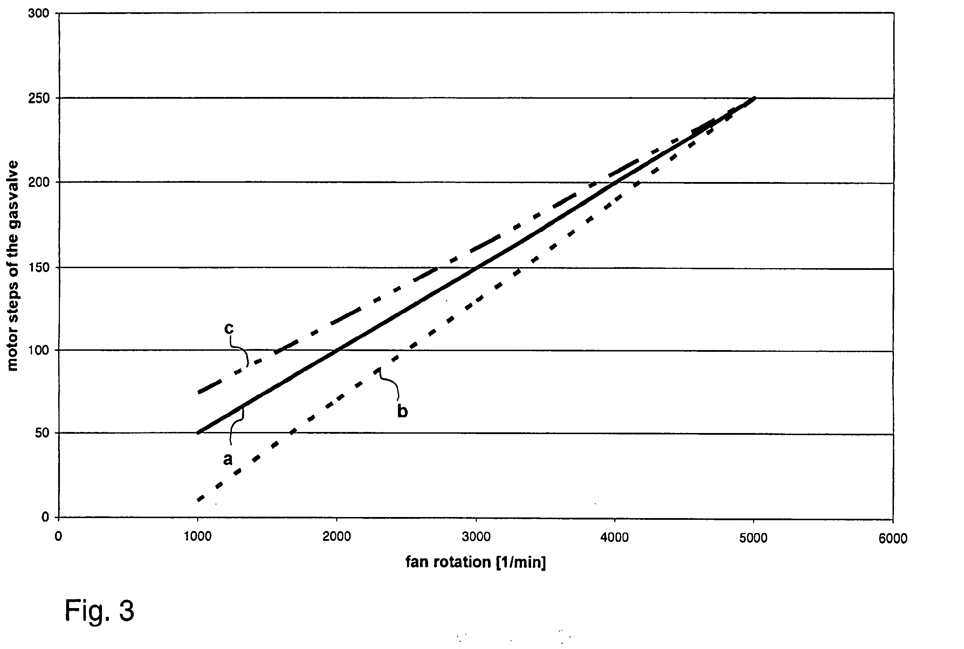

bestimmt. Im Speichermodul 31 der Regelung 3 ist eine Grund-Kennlinie a gemäß Figur 3 hinterlegt. Die Grundkennlinie a definiert das Verhältnis von Gebläsedrehzahl zur Schrittzahl des Schrittmotors 5 des Gasventils 4 bei Referenzbedingungen. Dementsprechend gibt die Regelung 3 dem Gebläse eine bestimmte Drehzahl und dem Schrittmotor 5 eine um den Korrektorfaktor k korrigierte Schrittstellung aus der Grundkennlinie a vor.

Ist der Korrekturwert bestimmt, kann die Sollluftzahl eingestellt werden. Um die Sollluftzahl von 1,25 zu erreichen, muss gemäß o.g. Voraussetzungen die Luftzahl um 0,17 erhöht werden.

Aus den Referenzwerten ist bekannt, um wie viele Taktung des Stellantriebes 5 in Form der Pulsweitenmodulation der Gasvolumenstrom reduziert werden muss, um eine Luftzahl von etwa 1,25 zu erreichen.

Aufgrund des relativ großen Sollbereichs (C in Fig. 2) muss die Messung und Regelung nicht einer besonderen Genauigkeit genügen. So ist es unproblematisch, wenn beispielsweise statt 500 ppm 700 ppm gemessen werden, da die Differenz beim Luftüberschuss für beide Kohlenmonoxidemissionen minimal ist. Auch die Abmagerung des Gemisches kann in einem relativ großen Toleranzband erfolgen. Es ist bekannt, dass handelsübliche Brenner, die mit Lambda 1,25 betrieben werden sollen, in einem Bereich zwischen 1,20 und 1,30 problemlos betrieben werden können. Es ist wiederum sehr leicht möglich das Gemisch derart abzumagern, dass man mit hinreichender Sicherheit diesen Bereich ansteuert.

Die Kalibrierung kann in festen Zyklen (z.B. Betriebszeit) durchgeführt werden.

Möglicherweise treten beim Betrieb mit dem Brenngas-Luft-Verhältnis, das sich durch die Kalibrierung einstellt, akustische Verbrennungsschwingungen, meist Brummen oder Pfeifen, ein. Diese sind in der Regel mit einem Anstieg der Kohlenmonoxidemissionen verbunden. Durch eine Veränderung des Brenngas-Luft-Verhältnisses können diese Geräusche beseitigt werden. Kommt es unmittelbar nach einer Kalibrierung zu einer erhöhten CO-Konzentration im Abgas, so wird das Gemisch etwas angefettet oder abgemagert (typisch $\lambda \pm 0,2$).

Heizgeräte verfügen häufig über eine Unterdruckkammer, in welcher sich die Komponenten befinden. Verbrennungsluft wird aus der Umgebung angesaugt und durch die Unterdruckkammer geleitet, bevor sie dem Brenner zugeführt wird. Hierdurch werden Wärmeverluste der Komponenten innerhalb der Unterdruckkammer aufgenommen und verbleiben im System. Dies hat jedoch zur Folge, dass sich nach einem Start eines kalten Heizgerätes die Luft in der Unterdruckkammer aufheizt; die Luftdichte und somit die vom Gebläse geförderte Luftmasse bei gleicher Drehzahl werden geringer, während sich die Gastemperatur und -masse nur unwesentlich ändern. Hierdurch sinkt die Luftzahl bei der Verbrennung ab. Bei einem elektronischen Gasluftverbund ist der Einfluss dieses Erwärmungseffekts wesentlich größer als bei einem pneumatischen Gasluftverbund, da kein direkter Zusammenhang zwischen dynamischem Drucksignal und Gasmenge besteht. Dies kann zu Luftzahlabweichungen von bis zu 20 % führen. Folge: Die Verbrennung erfolgt dann nicht im optimalen Bereich. Deshalb kann der Kalibriervorgang optional dann durchgeführt werden, wenn die Unterdruckkammer eine erhöhte Temperatur aufweist.

Es kann vorkommen, dass beispielsweise durch Flüssiggas-Luft-Beimischung im Winter das Brenngas-Luft-Verhältnis sich binnen Minuten ändert. Eine unsaubere Verbrennung würde so erst bei der nächsten routinemäßigen Kalibrierung korrigiert, evtl. sogar gänzlich unberücksichtigt bleiben, da zum Zeitpunkt der nächsten Kalibrierung wieder das ursprüngliche Gemisch vorläge. Um dies zu verhindern, mißt der Abgassensor 6 auch außerhalb der routinemäßigen Kalibrierung in bestimmten Abständen oder sogar permanent die Kohlenmonoxidemission im Abgasrohr 9. Ist ein bestimmter Grenzwert (Punkt B in Fig. 2) überschritten, so wird eine Kalibrierung von der Regelung 3 eingeleitet.

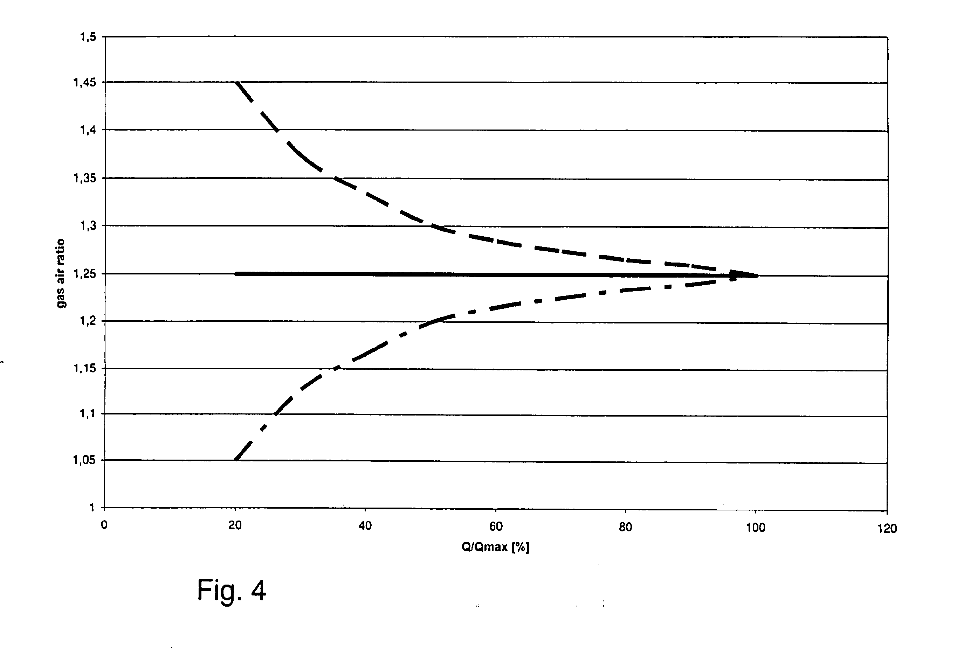

Es kann vorteilhaft sein, dass die Luftzahl über den Modulationsbereich eine bestimmte Tendenz hat. Figur 3 zeigt drei Kennlinien a, b und c, welche das Verhältnis der Drehzahl des Gebläses 2 zu Schrittzahl des Stellantriebs 5 des Gasventils 4 definieren. Figur 4 zeigt die dazugehörigen Verläufe der Luftzahl über der Belastung.

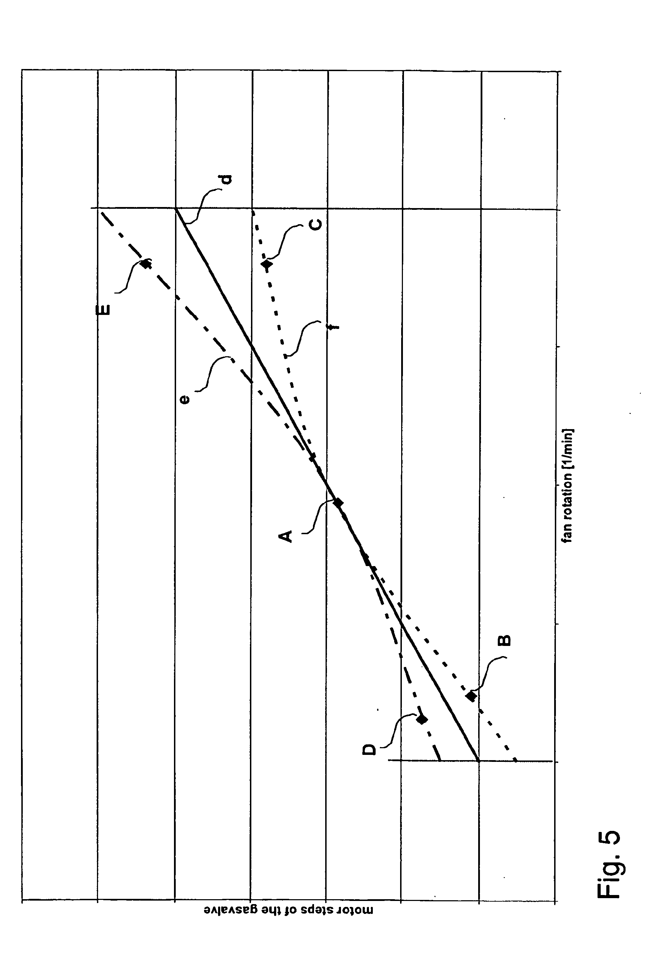

Figur 5 zeigt drei Kennlinien d, e und f, welche das Verhältnis der Drehzahl des Gebläses 2 zu Schrittzahl des Stellantriebs 5 des Gasventils 4 definieren. Zur Erstellung der Kennlinie d wurde das Heizgerät bei der Kalibrierung mit einer einzigen bestimmten Gebläsedrehzahl betrieben und hieraus der Kalibrierungspunkt A bestimmt. Der Kalibrierungspunkt A wird mit dem entsprechenden Referenzpunkt auf der Grundkennlinie a (Figur 3) verglichen und hieraus der Korrekturfaktor k bestimmt. Mit Hilfe des Korrekturfaktors k kann aus der Grundkennlinie a die angepasste Kennlinie d bestimmt werden.

Die Kennlinie e basiert auf der Kennlinie d und berücksichtigt weitere Kalibriervorgänge, bei denen die Kalibrierpunkte D und E ermittelt wurden. In einem Iterations- bzw. Extrapolationsverfahren wird aus der Kennlinie d sowie den Kalibrierpunkten D und E die Kennlinie e ermittelt. Analoges gilt für die Kennlinie f mit den Kalibrierpunkten B und C.

Es ist möglich, eine Kennlinie nur mit einem Kalibrierverfahren zu erstellen und weitere Kalibrierverfahren nur dann durchzuführen, wenn offenbar ungünstige Verbrennungsbedingungen vorliegen (hohe Kohlenmonoxid- oder KohlenwasserstoffEmissionen). Alternativ ist es möglich, auf jeden Fall bei der Kalibrierung mehrere Kalibrierpunkte zu berücksichtigen.

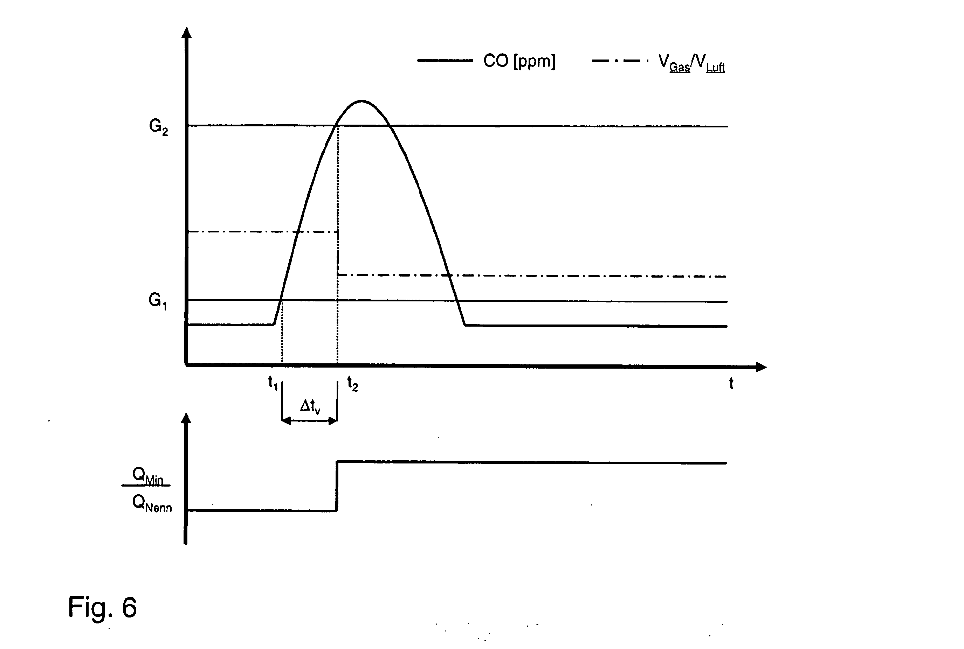

Fig. 6 zeigt im stationären Betrieb den Verlauf der gemessenen Kohlenmonoxidemissionen bei plötzlichem Windeinfall und der Kompensationsmaßnahme. Zunächst läuft das Gerät unterhalb des Grenzwertes $G_1$. Durch eine Windbeaufschlagung des Abgas-Luft-Systems erhöht sich der Strömungswiderstand; die Luftzahl nimmt signifikant ab und die Kohlenmonoxidemissionen steigen signifikant an, bis sie zum Zeitpunkt $t_1$ den Grenzwert $G_1$ überschreiten. Nun beginnt eine Zeiterfassung zu laufen. Zu einem Zeitpunkt $t_2$ wird der vorgegebene Grenzwert $G_2$ überschritten. Ist die Zeitdifferenz $t_2-t_1$ kleiner als eine vorgegebene Zeitspanne $\Delta t_v$, so wird das Brenngas-Luft-Gemisch abgemagert. Hierdurch sinken die Kohlenmonoxidemissionen. Fällt der CO-Messwert unter den Grenzwert $G_1$ und steigt der CO-Messwert später wieder an, so kann das daran liegen, dass der Windeinfall nicht mehr besteht und daher das Brenngas-Luft-Gemisch viel zu mager ist, was ebenfalls hohe CO-Emissionen zur Folge haben kann. Dementsprechend muss im Speichermodul 31 eine Information abgelegt sein, die besagt, dass eine Abmagerung stattgefunden hat. In Kenntnis dieser Tatsache kann vorgesehen sein, dass anstelle einer Abmagerung eine Anfettung vorgenommen wird.

Bei einer derartigen Betriebsweise ist es sinnvoll, dass die untere Modulationsgrenze angehoben wird, da ansonsten sehr kleine Brennerbelastungen auftreten könnten, bei welchen ein stabiler Brennerbetrieb nicht sichergestellt ist.

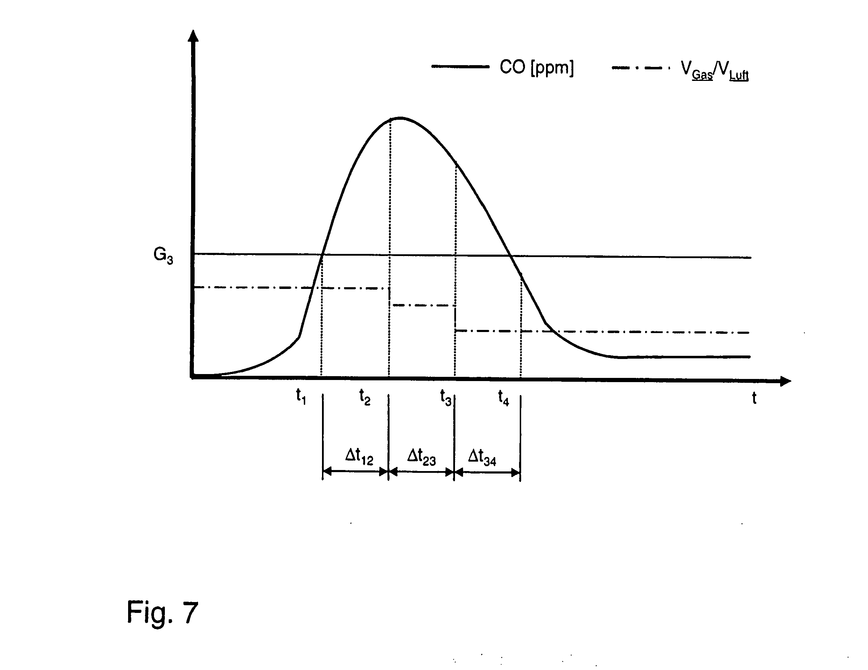

Figur 7 zeigt beim Brennerstart den Verlauf der gemessenen Kohlenmonoxidemissionen bei Windeinfall und der Kompensationsmaßnahme. Wird ein vorgegebener Grenzwert G3 überschritten, so wird das Brenngas-Luft-Gemisch abgemagert und eine Wartezeit $\Delta t_{12}$ abgewartet. Ist der CO-Messwert immer noch größer $G_3$, so wird das Brenngas-Luft-Gemisch abermals abgemagert. Diese Prozedur kann mehrmals wiederholt werden. Fällt der CO-Messwert unter den Grenzwert $G_3$ und steigt der CO-Messwert später wieder an, so kann auch hier aus oben genannten Gründen eine Anfettung geboten sein.

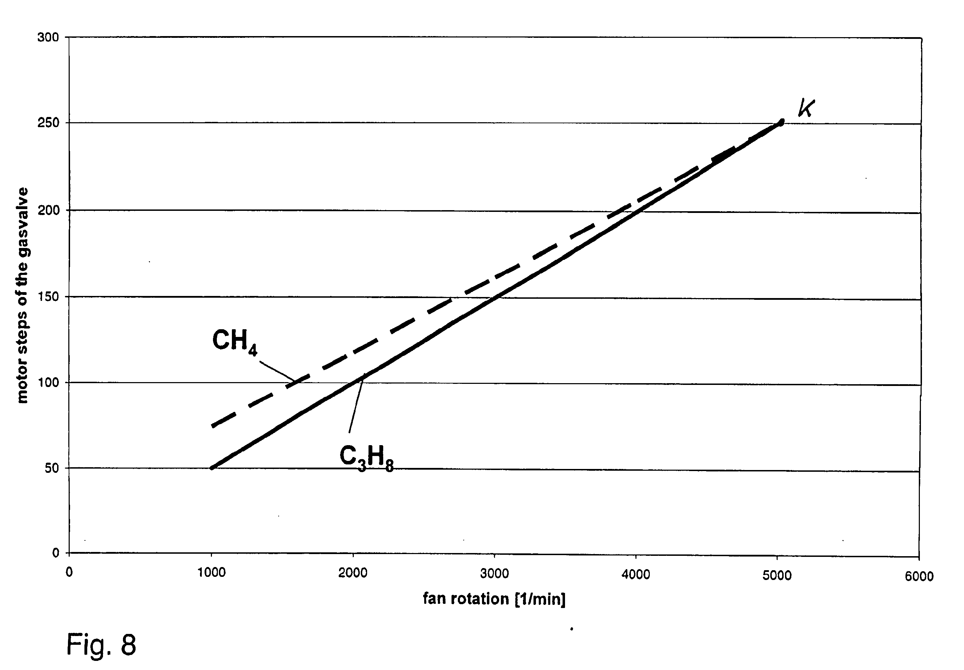

Fig. 8 zeigt eine Kennlinie für Flüssiggas $C_3H_8$ unter Verwendung der zusätzlichen Drossel 17 und eine Kennlinie für Erdgas $CH_4$.

Im Vergleich zwischen Erdgasen und Flüssiggasen sind bei gleicher Geräteleistung die Gasvolumenströme um den Faktor 2,6 unterschiedlich. Deshalb wird in die Brenngaszuführung 11 oder Brenngasleitung 12 vor oder hinter dem Gasventil 4 ein Drosselelement 17 eingebaut. Damit wird erreicht, dass bei maximaler Geräteleistung die Schrittzahl des Stellantriebs 5 des Gasventils 4 trotz niedriger Volumenströme die gleiche ist wie beim Erdgasbetrieb.

Über die Modulationsbandbreite unterscheidet sich die Flüssiggaskennline jedoch von der Erdgaskennline. Man erkennt, dass die Flüssiggaskennline wesentlich flacher verläuft als die Erdgaskennline. Dies führt bei Systemen gemäß dem Stand der Technik dazu, dass man dem Gerät "mitteilen" muss, mit welcher Gasart es betrieben wird. Diese Einstellung erfolgt meist über Tasten an der Regelung 3.

Demgegenüber muss lediglich oben erwähntes Drosselelement 17 eingebaut werden, die dafür sorgt man, dass im Volllastpunkt unabhängig ob Erd- oder Flüssiggas das richtige Mischungsverhältnis vorliegt.

Das Heizgerät wird mit Volllast in Betrieb genommen. Danach wird die Leistung reduziert, indem die Gebläsedrehzahl und die Schrittzahl des Stellantriebs 5 entsprechend der Erdgaskennlinie eingestellt werden. Wird das Heizgerät mit Flüssiggas betrieben, so wird das Brenngas-Luft-Gemisch überfettet, da das Heizgerät bei Flüssiggas gemäß der Flüssiggaskennlinie, also das Heizgerät mit weniger Öffnung des Gasventils 4 betrieben werden müsste. Da bei nahstöchiometrischer Verbrennung der CO-Gehalt im Abgas sprungartig ansteigt und dieser Anstieg vom CO-Sensor 6 detektiert wird, kann die Regelung 3, welche das Signal des CO-Sensors 6 übermittelt bekommt, von der Erdgaskennlinie auf die Flüssiggaskennlinie umschalten.

Da es sowohl bei Erdgas, als auch Flüssiggas Unterschiede in der Zusammensetzung gibt, kann auch eine Feinabstimmung vorgenommen werden. Hierzu wird bei einer vorgegebenen Gebläsedrehzahl das Gasventil 4 - ausgehend von magerem Gemisch - solange Richtung fetterem Gemisch verstellt, bis eine bestimmte Kohlenmonoxidemission sich einstellt. Das gleiche wird bei einer anderen Gebläsedrehzahl durchgeführt. Die beiden Einstellungen, die sich auf diese Art ergeben, sind signifikant für die Gasart. Hierdurch lässt sich das Gerät individuelle auf die Brenngaszusammensetzung einstellen, indem für den Sollbetriebspunkt die Brenngasmenge beispielsweise gegenüber den ermittelten Referenzpunkten um 20 % reduziert wird und die Modulationskennlinie entlang dieser beiden Sollbetriebspunkte interpoliert wird.

Hierdurch ist es auch prinzipiell möglich, auf die Düse für den Flüssiggasbetrieb gänzlich zu verzichten. Bei dem Verfahren zur Umstellung von Erdgas auf Flüssiggas ohne Drosseldüse 17 ist jedoch darauf zu achten, dass zeitweise die Zusammensetzung des Brenngas-Luft-Gemischs außerhalb des Zündbereichs liegen könnte und es möglicherweise bei Überschreitung der Zündgrenze zu einer Verpuffung kommen könnte. Daher wären Pausenzeiten mit reinen Luftspülpausen ratsam.

Ferner ist darauf zu achten, dass es sowohl bei nahstöchiometrischer, als auch bei sehr überstöchiometrischer Verbrennung zu einem starken Anstieg der Kohlenmonoxidemissionen kommt. Um zu erkennen, ob die aktuelle Verbrennung nahstöchiometrisch oder stark überstöchiometrisch ist, kann das Brenngas-Luft-Verhältnis verändert werden. Ist die Verbrennung stark überstöchiometrisch und wird das Gemisch angefettet, so sinken die Kohlenmonoxidemissionen; bei nahstöchiometrischer Verbrennung würden die Kohlenmonoxidemissionen weiter ansteigen.

Optional kann bei der Kalibrierung zur Veränderung des Gemischs in Richtung brennstoffreicherer Zusammensetzung statt einer Erhöhung der Brenngasmenge auch die Luftmenge reduziert werden, während die Gasmenge konstant bleibt. Auch kann statt eines absoluten Kohlenmonoxidsignals ein Gradient (z.B. CO-Änderung pro Drehzahländerung des Gebläses) gemessen werden. Der Schwellwert muss nicht einem bestimmten CO-äquivalenten Signal entsprechen, sondern kann z.B. auch gemäß Grundrauschen ohne CO (z.B. 20 mV) plus Abschaltwert (z.B. 0,5 V) bestimmt werden. In diesem Fall würde man voraussetzen, dass das Messsignal bei Kohlenmonoxidkonzentrationen im angestrebten Betriebsbereich sich deutlich unter diesem Schwellwert befinden und der Schwellwert ein Indiz dafür ist, dass ein bestimmtes Brenngas-Luft-Verhältnis in Richtung brennstoffreicherem Gemisch unterschritten wurde.

Eine weitere Variante des Verfahrens besteht darin, dass die Kalibrierung nicht durch eine Anfettung des Gemischs bis zu einem Schwellwert und anschließende Abmagerung geschieht, sondern vielmehr durch eine Abmagerung des Gemischs bis zu einem Schwellwert und anschließende Anfettung. Hierbei wird berücksichtigt, dass - wie aus Fig. 2 ersichtlich - auch bei sehr brennstoffarmen Gemischen die Kohlenmonoxid-Emissionen ansteigen. Während bei dem Kohlenmonoxidanstieg bei brennstoffreichen Gemischen der Beginn des steilen Anstiegs bei nahezu allen Brennern im gleichen λ-Bereich liegt, ist der steile Anstieg bei brennstoffarmen Gemischen sehr brennerspezifisch. Dies gilt sowohl für den Beginn des Ansteigs, als auch für den Gradienten ($\Delta$ CO / $\Delta$ λ).

Es ist ferner bekannt, dass sich im Abgas die Emissionen an unverbrannten Kohlenwasserstoffen in der gleicher Art verhalten wie die Kohlenmonoxid-Emissionen. Daher kann bei dem erfindungsgemäßen Verfahren auch ein Sensor verwendet werden, der ein den unverbrannten Kohlenwasserstoffen äquivalentes Signal erzeugt.

## Patentansprüche

1. Verfahren zur Regelung eines Gasbrenners (1), insbesondere mit Gebläse (2), mit einer elektronischen Regelung (3), welche zu einer vorgegebenen Brennerleistung ein Sollsignal für die Brenngasmenge und die Luftmenge vorgibt, einer Einrichtung zur Regelung der Brenngasmenge (4, 5) und einem Abgassensor (6), der ein der Kohlenmonoxid-Konzentration oder Konzentration an unverbrannten Kohlenwasserstoffen äquivalentes Signal erzeugt, bei dem ein Kalibirierungsvorgang durchfahren wird, in dem das Brenngas-Luft-Gemisch angefettet beziehungsweise abgemagert wird bis der Abgassensor (6) ein Signal erfaßt, das alleine oder in Verbindung mit mindestens einem weiteren Signal einem vorgegebenen oder errechneten Schwellwert entspricht, zu diesem Zustand das Signal für die Brenngasmenge und die Luftmenge erfaßt wird und anschließend das Brenngas-Luft-Gemisch wieder in einem vorgegebenen Verhältnis abgemagert beziehungsweise angefettet wird, wodurch neue Sollwerte für die Brenngasmenge und Luftmenge vorgegeben werden, wobei außerhalb eines Kalibriervorgangs bei der Überschreitung eines ersten, vorgegeben Grenzwertes des der Kohlenmonoxid-Konzentration oder Konzentration an unverbrannten Kohlenwasserstoffen äquivalentes Signals eine Zeiterfassung gestartet wird, **dadurch gekennzeichnet, dass** bei Überschreitung eines zweiten, vorgegeben Grenzwertes des der Kohlenmonoxid-Konzentration oder Konzentration an unverbrannten Kohlenwasserstoffen äquivalentes Signals innerhalb einer vorgegebenen Zeitspanne das Brenngas-Luft-Gemisch dauerhaft oder temporär abgemagert oder ein Kalibriervorgang eingeleitet wird.

**Claims**

1. Method for control of a gas burner (1), particularly with a fan (2), with an electronic control (3), which gives a nominal signal for the fuel gas quantity and the air quantity at a preset burner capacity, a device for control of the fuel gas quantity (4, 5) and a flue gas sensor (6), which generates a signal equivalent to the carbon monoxide concentration or concentration of unburned hydrocarbons, in which a calibration operation is carried out, in which the fuel gas and air mixture is enriched or leaned until the flue gas sensor (6) detects a signal, which alone or in connection with at least one other signal corresponds to a predetermined or calculated threshold value, at the level of which the signal for the fuel gas quantity and the air quantity is detected, and subsequently the fuel gas and air mixture is again leaned or enriched in a predetermined ratio, whereby new nominal values are given for the fuel gas quantity and air quantity, whereby outside of a calibration operation, when a first, predetermined limit value of the signal equivalent to the carbon-monoxide concentration or concentration of unburned hydrocarbons is exceeded, time recording is started, **characterised in that** when a second, predetermined limit value of the signal equivalent to the carbon-monoxide concentration or concentration of unburned hydrocarbons is exceeded within a predetermined time period, the fuel gas and air mixture is permanently or temporarily leaned, or a calibration process is introduced.

**Revendications**

1. Procédé de régulation d'un brûleur à gaz (1), notamment avec ventilateur (2), comprenant une régulation électronique (3) qui prédéfinit un signal de consigne pour la quantité de gaz combustible et la quantité d'air à une puissance de brûleur prédéfinie, un dispositif pour la régulation de la quantité de gaz combustible (4, 5) et un capteur de gaz d'échappement (6) qui génère un signal équivalent à la concentration en monoxyde de carbone ou concentration en hydrocarbures non brûlés, dans lequel un processus d'étalonnage est effectué dans lequel le mélange gaz combustible-air est enrichi ou amaigri jusqu'à ce que le capteur de gaz d'échappement (6) détecte un signal qui, seul ou en relation avec au moins un autre signal, correspond à une valeur seuil prédéfinie ou calculée au niveau de laquelle le signal pour la quantité de gaz combustible et la quantité d'air est détecté et le mélange gaz combustible-air est ensuite de nouveau amaigri ou enrichi dans un rapport prédéfini, moyennant quoi de nouvelles valeurs de consigne pour la quantité de gaz combustible et la quantité d'air sont prédéfinies, dans lequel en dehors d'un processus d'étalonnage, en cas de dépassement d'une première valeur limite prédéfinie du signal équivalent à la concentration en monoxyde de carbone ou concentration en hydrocarbures non brûlés, une détection temporelle est démarrée, **caractérisé en ce que**, en cas de dépassement d'une seconde valeur limite prédéfinie du signal équivalent à la concentration en monoxyde de carbone ou concentration en hydrocarbures non brûlés au sein d'un intervalle de temps prédéfini, le mélange gaz combustible-air est amaigri de manière durable ou temporaire ou un processus d'étalonnage est introduit.

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 770824 B1
- EP 833106 A
- US 5190454 A
- EP 1331444 A